# EUROPEAN PATENT SPECIFICATION

(11) **EP 2 404 777 B1**
(45) Date of publication and mention of the grant of the patent: **29.04.2015**
(21) Application number: 10305756.8
(22) Date of filing: 07.07.2010
(51) Int. Cl.: B60L 5/26, B60M 1/28

(54) **A device for monitoring condition of a railway supply**
Vorrichtung zur Überwachung des Zustands einer Eisenbahnversorgung
Dispositif pour surveiller l'état d'une alimentation de chemin de fer

(43) Date of publication of application: 11.01.2012
(73) Proprietor: ALSTOM Transport Technologies, 92300 Levallois-Perret (FR)
(72) Inventor: Tanarro Marquez, Francesc, 08027 Barcelona (ES); Gratacos Marti, Pau, 08911 Badalona Barcelona (ES); Sanchez Pujadas, Francisco Javier, 08173 Barcelona (ES); Jimenez Minguell, Joan Ramon, Sabadell (ES); Antens, Jacobus, 08204 Sabadell (ES); Sala i Esteva, Enric, 17220 Sant Feliu de Guixols (ES)
(74) Representative: Blot, Philippe Robert Emile

(56) References cited:
- EP-A1- 2 048 021
- JP-A- 8 265 904
- JP-A- 2001 235 310
- JP-A- 2008 104 312
- JP-A- 2009 244 023
- US-A1- 2003 142 297

## Description

The present invention relates to a device for monitoring condition of a railway supply line (also called contact line or overhead line), when said supply line is in contact with a head of a pantograph of a vehicle in order to power said vehicle.

A device for monitoring condition of a railway supply line is known from prior art, in particular from JP 2001-235310. This device includes a camera for monitoring parameters indicative of operating capability of said supply line.

In JP 2001-235310, the vehicle includes a pantograph provided with a measurement element comprising a support and a slider intended to slide along the supply line. The slider is connected with the support by means of springs. The slider and the support each hold an infrared light source, so that the camera is intended to register the relative position of the light sources regarding a vertical direction.

Since the measurement element is arranged between the pantograph and the supply line, this pantograph cannot be used during commercial service, due to safety issues, in particular due to risks of electric shock.

One of the objects of the invention is to overcome this disadvantage by proposing a device for monitoring condition of a railway supply line, easy to implement, which allows the pantograph to be used during commercial service when monitoring condition of the supply line

Further devices for monitoring condition of a railway supply line are known from JP 2009-244 023, JP 2008-104312, EP 2048021 A1 and US 2003/0142297.

To this end the invention relates to a device according to claim 1.

Such a reflective element can be arranged onto the pantograph head without any change on this pantograph, so that said pantograph still can be used for power the vehicle. Thus, the invention makes it possible to monitor condition of a railway supply during commercial service of railway vehicles.

Moreover, any railway vehicle can be equipped with the monitoring device. Thus, by equipping several service trains running on a railway, it is possible to continuously monitor condition of the railway supply line.

Other features of the monitoring device of the invention are as follows:
- the device comprises calculating means for processing said monitored parameters to determine whether said parameters are changing relative to reference values and to determine whether the changes are indicative of an increased risk of a malfunction in said supply line;
- the device comprises a Global Positioning System, intended to localize a defect on the supply line when the calculating means determine that there is a risk of a malfunction;
- the calculating means are intended to calculate the acceleration of the vertical moves of the pantograph head, by comparing successive captures, and to calculate the force that the pantograph applies on the supply line, based on this acceleration;
- the camera is a linear camera, configured so as to deliver at least 1000 measures per second;
- the pattern of the reflective element comprises at least two horizontal strips, made of a retro-reflective material;
- the device comprises an infrared light source, directed toward the reflective element, and the camera comprises a filter tuned at the same wave length as the infrared light source.

The invention also relates to a pantograph having a head intended to be in contact with a railway supply line, the pantograph comprising a reflective element, having a pattern.

The invention also relates to a vehicle having a pantograph comprising a pantograph head intended to contact a railway supply line in order to power said vehicle, the vehicle comprising a device as disclosed above.

Other aspects and advantages of the invention will become apparent on reading the following description which is given by way of example and refers to the attached drawings in which:
- Figure 1 is a schematic representation of a vehicle equipped with a device of the invention,
- Figure 2 is a schematic representation of the device that equips the vehicle of figure 1, and
- Figure 3 is a front view of a reflective element of the device of figure 2.

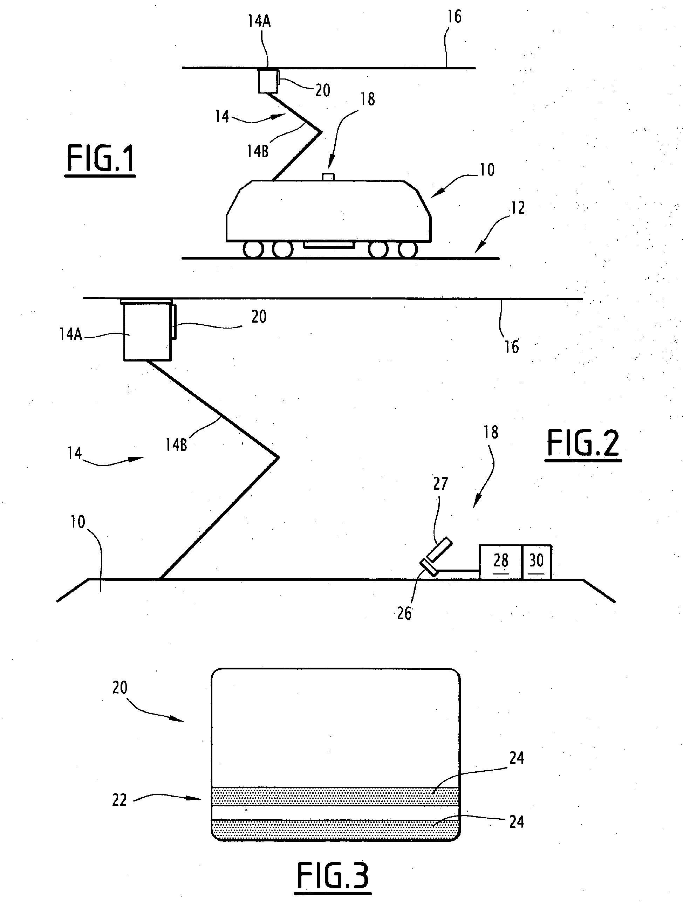

With reference to Figure 1 we describe a vehicle 10 intended to run on a railway 12.

The vehicle 10 is an electric train, which comprises at least one pantograph 14, intended to collect current from a supply line 16 of the railway 12, also called catenary 16, in order to power the electric train 10. To this end, the pantograph 14 comprises a pantograph head 14A, intended to contact the supply line 16 and to slide along this supply line 16. The pantograph 14 also comprises an articulated arm 14B, intended to hold the pantograph head 14A. The articulated arm 14B acts as a spring for pressing the pantograph head 14A against the supply line 16.

For maintenance reasons, it is important to monitor parameters indicative of operating capability of said supply line 16, in particular in order to detect defects of the supply line 16. A current monitored parameter is the force that the pantograph 14 applies to the supply line 16, that can be deducted from the moves of the pantograph head 14A regarding a vertical direction.

To this end, the vehicle 10 is equipped with a device 18 for monitoring condition of the railway supply line 16 when said supply line 16 is in contact with the pantograph head 14A.

The monitoring device 18 includes a reflective element 20, shown on Figure 2, arranged onto the pantograph head 14A. The reflective element 20 is preferably glued on the pantograph head 14A. For instance, the reflective element 20 is a reflective sticker.

It should be noticed that the reflective element 20 is easy to install or to replace on the pantograph head 14A, and that it does not requires structural changes of the pantograph head 14A. Moreover, since no stress is applied to the reflective element 20, said reflective element 20 requires low maintenance.

The reflective element 20 comprises a passive pattern 22, and does not include an emissive element. For instance, the pattern 22 comprises at least two horizontal strips 24, made of a retro-reflective material, i.e. a material able to reflect incident light rays so that each reflected light rays is reflected approximately in the opposite direction of the corresponding incident light ray.

The moves of the horizontal strips 24 regarding the vertical direction are the same as the moves of the pantograph head 14A regarding this vertical direction. Thus, it is possible to monitor the moves of the pantograph head 14A by monitoring the moves of the pattern 22.

To this end, the monitoring device 18 also includes a camera 26, arranged on the vehicle 10. The camera 26 focus on the pantograph head 14A so as to register the position of the pattern 22 regarding the vertical direction.

Advantageously, the camera 26 is a linear camera, i.e. a camera whose sensors are aligned along the vertical direction, so that the captures are only linear.

The camera 26 is a high resolution camera, so that it can detect pattern 22 moves in less than 1 mm increments. Thus, the monitoring of the moves of the pantograph head 14A is very accurate.

The camera is configured so as to deliver at least 1000 captures per second. Since each capture corresponds to a portion of the supply line 16, a high number of captures per second makes it possible to monitor portions of the supply line 16 that are very close each other, even on a high speed vehicle 10. So, because of this high sample frequency, the monitoring device 18 can be used on a high speed vehicle 10.

Besides, the camera 26 comprises a movable tilt and shift lens. Tilt is a movement of the lens so that the plane of the lens is tilted relative to a plane of sensors of the camera. Shift is a movement of the lens parallel to the plane of the sensors. Tilt and shift movements guarantee a sufficient depth of field in order to obtain sharp images of the pattern 22.

Advantageously, the monitoring device 18 comprises an infrared light source 27, arranged near the camera 26 and directed toward the reflective element 20. In this case, the camera 26 comprises a filter tuned at the same wave length as the infrared light source 27, in order to cancel the visible light. Preferentially, the wave length of the infrared light source 27 is approximately 960 nm.

Thus, the camera 26 only detects the light from the infrared light source 27, which is reflected on the reflective element 20. So, the camera captures are not influenced by the environmental light, especially by the light of the sun, which has a low gain in said wave length.

Besides, the monitoring device 18 comprises calculating means 28, e.g. a computer with some dedicated hardware, connected to the camera 26. The calculating means 28 are intended to process said monitored parameters, i.e. the moves of the pantograph head 14A, in order to determine whether said parameters are changing relative to reference values and to determine whether the changes are indicative of an increased risk of a malfunction in said supply line.

Previous to any calculation, the calculation means 28 are calibrated, using a reference pattern, which delimits a work range for the measures, and the bounds of said work range. The work range is usually the same as the range of movements of the supply line 16, i.e. about 1500 mm, and the bounds of the work range are correspond to the lower and higher positions of the supply line 16.

Once the work range and the bounds are defined, the vertical position of pantograph head 14A is measured regarding the reference pattern. When the train 10 is moving, this position varies during the time.

Making the derivation of the measured position referred to the time, it's obtained the speed of pantograph head 14A in a vertical direction.

Following the same process, deriving the speed, it's obtained the acceleration of said pantograph head 14A in the vertical direction. With this parameter, following second Newton's law, it is possible to obtain the force applied by the pantograph head 14A on the supply line 16, by multiplying said acceleration by the equivalent mass of the pantograph head interacting with said supply line (F=m*a). This equivalent mass is classically obtained from the pantograph static uplift force.

Another calculating method can be used when the interaction between the supply 16 and the pantograph head 14A is known and already modelled. Indeed, it is possible to obtain differential equation of the dynamic behaviour of the pantograph head 14A, and to take this equation as a reference. The three derivatives on said equation are equivalent to vertical position, speed and acceleration.

With three samples from the online measures, it is possible to calculate, on real time, three parameters of the differential equation. Comparing if this parameters are inside the tolerance bounds, a high accurate monitoring is obtained.

Advantageously, monitoring the progressive deviation of these parameters due to wearing of the supply line and the pantograph, it is possible to establish a model of failure prediction. It implies a large number of measures to establish this model.

Advantageously, the camera 26 is also configured to detect electric sparks between the pantograph 14 and the supply line 16, when the contact between said pantograph 14 and said supply line 16 is broken.

Advantageously, the monitoring device 18 comprises Global Positioning System (GPS) 30, connected to the calculating means 28. Thus, when the calculating means 28 determine that there is a risk of a malfunction, the Global Positioning System 30 determines the position of the vehicle 10 onto the railway 12, so that to inform a maintenance department about the localisation of the defect on the supply line 16.

So, the maintenance department can operate a preventive maintenance action onto portions of the supply line 16 where a defect is detected, in order to avoid failures in these defective portions of the supply line 16.

It should be noticed that, since the monitoring device 18 can be installed on any vehicle 10, it is advantageous to install such monitoring devices 18 on several service vehicles, so that to continuously monitor the condition of the supply line 16 during a commercial service.

The invention allows monitoring the supply line 16 condition, without contact, thus avoiding electrical issues.

The invention is not limited to the embodiment disclosed above. In particular, the reflective element 20 can comprise a pattern different from the two horizontal strips.

## Claims

1. A device (18) for monitoring condition of a railway supply line (16) when the supply line (16) is in contact with a head (14A) of a pantograph (14) of a vehicle (10) in order to power said vehicle (10), said device (18) including
- a camera (26) for monitoring parameters indicative of operating capability of said supply line (16),
- a reflective element (20), comprising a pattern (22), arranged onto the pantograph head (14A), the camera (26) being arranged on the vehicle (10) so as to register the pattern position regarding a vertical direction **characterized in that** the camera (26) comprises a movable lens, by tilting and shifting.

2. A device (18) according to claim 1, comprising calculating means (28) for processing said monitored parameters to determine whether said parameters are changing relative to reference values and to determine whether the changes are indicative of an increased risk of a malfunction in said supply line (16).

3. A device (18) according to claim 2, comprising a Global Positioning System (30), intended to localize a defect on the supply line (16) when the calculating means (28) determine that there is a risk of a malfunction.

4. A device (18) according to claim 2 or 3, wherein the calculating means (28) are intended to calculate the acceleration of the vertical moves of the pantograph head (14A), by comparing successive captures, and to calculate the force that the pantograph (14) applies on the supply line (16), based on this acceleration.

5. A device (18) according to one of claims 1 to 4, wherein the camera (26) is a linear camera, configured so as to deliver at least 1000 measures per second.

6. A device (18) according to one of claims 1 to 5, wherein the pattern (22) of the reflective element (20) comprises at least two horizontal strips (24), made of a retro-reflective material.

7. A device (18) according to one of claims 1 to 6, comprising an infrared light source (27), directed toward the reflective element (20), and the camera (26) comprises a filter tuned at the same wave length as the infrared light source (27).

8. A vehicle (10) having a pantograph (14) comprising a pantograph head (14A) intended to contact a railway supply line (16) in order to power said vehicle (10), **characterized in that** the vehicle (10) comprises a device according to one of claims 1 to 7.

## Patentansprüche

1. Eine Vorrichtung (18) zum Überwachen eines Zustands einer Eisenbahnversorgungsleitung (16), wenn die Versorgungsleitung (16) im Kontakt mit einem Kopf (14A) eines Stromabnehmers (14) eines Fahrzeugs (10) ist, um das Fahrzeug (10) mit Energie zu versorgen, wobei die Vorrichtung (18) aufweist:
eine Kamera (26) zum Überwachen von die Betriebsfähigkeit der Versorgungsleitung (16) anzeigenden Parametern,
ein Reflexionselement (20), welches ein Muster (22), welches an dem Stromabnehmerkopf (14A) angeordnet ist, aufweist, wobei die Kamera (26) an dem Fahrzeug (10) angeordnet ist, um die Musterposition in Bezug auf eine vertikale Richtung zu erfassen, **gekennzeichnet dadurch, dass** die Kamera (26) eine durch Kippen und Verschieben bewegbare Linse aufweist.

2. Eine Vorrichtung (18) gemäß Anspruch 1, aufweisend Berechnungsmittel (28) zum Verarbeiten der überwachten Parameter, um zu ermitteln, ob die Parameter sich bezüglich Bezugswerten verändern, und um zu ermitteln, ob die Veränderungen ein Hinweis für ein erhöhtes Risiko einer Fehlfunktion in der Versorgungsleitung (16) sind.

3. Eine Vorrichtung (18) gemäß Anspruch 2, aufweisend ein globales Positionsbestimmungssystem (30), welches dazu vorgesehen ist, einen Defekt an der Versorgungsleitung (16) zu lokalisieren, wenn die Berechnungsmittel (28) ermitteln, dass es ein Risiko einer Fehlfunktion gibt.

4. Eine Vorrichtung (18) gemäß Anspruch 2 oder 3, wobei die Berechnungsmittel (28) dazu vorgesehen sind, die Beschleunigung der Vertikalbewegungen des Stromabnehmerkopfs (14A) durch Vergleichen von aufeinanderfolgenden Erfassungen zu berechnen und die Kraft, welche der Stromabnehmer (14) auf die Versorgungsleitung (16) aufbringt, basierend auf dieser Beschleunigung zu berechnen.

5. Eine Vorrichtung (18) gemäß einem der Ansprüche 1 bis 4, wobei die Kamera (26) eine Linearkamera ist, welche dazu eingerichtet ist, wenigstens 1000 Messungen pro Sekunde zu liefern.

6. Eine Vorrichtung (18) gemäß einem der Ansprüche 1 bis 5, wobei das Muster (22) des Reflexionselements (20) wenigstens zwei horizontale Streifen (24) aufweist, welche aus einem rückstrahlenden Material gefertigt sind.

7. Eine Vorrichtung (18) gemäß einem der Ansprüche 1 bis 6, aufweisend eine Infrarotlichtquelle (27), welche hin zu dem Reflexionselement (20) gerichtet ist, und die Kamera (26) weist auf einen Filter, welcher auf die gleiche Wellenlänge wie die Infrarotlichtquelle (27) eingestellt ist.

8. Ein Fahrzeug (10), welches einen Stromabnehmer (14) aufweist, welcher einen Stromabnehmerkopf (14A) aufweist, welcher dazu vorgesehen ist, eine Eisenbahnversorgungsleitung (16) zu berühren, um das Fahrzeug (10) mit Energie zu versorgen, **gekennzeichnet dadurch, dass** das Fahrzeug (10) eine Vorrichtung gemäß einem der Ansprüche 1 bis 7 aufweist.

## Revendications

1. Dispositif (18) pour surveiller la condition d'une ligne d'alimentation de chemin de fer (16) lorsque la ligne d'alimentation (16) est en contact avec une tête (14A) d'un pantographe (14) d'un véhicule (10) afin d'alimenter ledit véhicule (10), ledit dispositif (18) comprenant :
- une caméra (26) pour surveiller des paramètres indicatifs d'une capacité de fonctionnement de ladite ligne d'alimentation (16),
- un élément réfléchissant (20), comprenant un motif (22) agencé sur la tête de pantographe (14A), la caméra (26) étant agencée sur le véhicule (10) de manière à enregistrer la position du motif par rapport à une direction verticale,
**caractérisé en ce que** la caméra (26) comprend une lentille pouvant être déplacée, par inclinaison et décalage.

2. Dispositif (18) selon la revendication 1, comprenant des moyens de calcul (28) pour traiter lesdits paramètres surveillés pour déterminer si lesdits paramètres changent par rapport à des valeurs de référence et pour déterminer si les changements sont indicatifs d'un plus grand risque de dysfonctionnement de ladite ligne d'alimentation (16).

3. Dispositif (18) selon la revendication 2, comprenant un système de positionnement mondial (30), destiné à localiser un défaut sur la ligne d'alimentation (16) lorsque les moyens de calcul (28) déterminent qu'il y a un risque de dysfonctionnement.

4. Dispositif (18) selon les revendications 2 ou 3, dans lequel les moyens de calcul (28) sont destinés à calculer l'accélération des déplacements verticaux de la tête de pantographe (14A), en comparant les captures successives, et à calculer la force que le pantographe (14) applique à la ligne d'alimentation (16), sur la base de cette accélération.

5. Dispositif (18) selon l'une des revendications 1 à 4, dans lequel la caméra (26) est une caméra linéaire, configurée de manière à délivrer au moins 1.000 mesures par seconde.

6. Dispositif (18) selon l'une des revendications 1 à 5, dans lequel le motif (22) de l'élément réfléchissant (20) comprend au moins deux bandes horizontales (24), réalisées en un matériau rétro-réfléchissant.

7. Dispositif (18), selon l'une des revendications 1 à 6, comprenant une source de lumière infrarouge (27) dirigée vers l'élément réfléchissant (20), la caméra (26) comprenant un filtre accordé à la même longueur d'onde que la source de lumière infrarouge (27).

8. Véhicule (10) comportant un pantographe (14) comprenant une tête de pantographe (14A) destinée à venir en contact avec une ligne d'alimentation de chemin de fer (16) afin d'alimenter ledit véhicule (10), **caractérisé en ce que** le véhicule (10) comprend un dispositif selon l'une des revendications 1 à 7.
